Europäisches Patentamt

**European Patent Office**

Office européen des brevets

(11) Publication number: **0 033 809**
**A2**

# EUROPEAN PATENT APPLICATION

(21) Application number: **80304757.0**

(22) Date of filing: **30.12.80**

(51) Int. Cl.³: **G 11 B 21/20, G 11 B 21/12**

(30) Priority: **08.02.80 US 119685**

(43) Date of publication of application: **19.08.81**
**Bulletin 81/33**

(84) Designated Contracting States: **DE FR GB**

(71) Applicant: **MAGNETIC PERIPHERALS INC., 8100-34th
Avenue South, Minneapolis Minnesota 55440 (US)**

(72) Inventor: **Vos, Leroy Alois, 2137 Burns Avenue, St. Paul
Minnesota 55119 (US)**

(74) Representative: **Caro, William Egerton et al, J. MILLER &
CO. Lincoln House 296-302 High Holborn, London
WC1V 7JH (GB)**

(54) **Head arm.**

(57) A head arm comprises a rigid body (18) connected
to a disc memory carriage. A head pad support (39) is
attached in cantilever fashion to and extends past an edge
(43) of the body and substantially perpendicular therefo.
The support carries a head pad (25) at its free end so that
it is orientated with the plane of a flying surface (44) substantially parallel to the long dimension of the support. The
support is shaped to provide small resistance to movement of the head pad orthogonal to the plane of the flying
surface and substantial resistance to movement parallel to
the plane of the flying surface.

A relatively rigid load arm (19) is attached at a first
end to the body in a position in which a second end is
adjacent the side of the head pad opposite the flying sur-
face. A resilient tongue (20) urges the second end of the
load arm toward the head pad with a predetermined force.
A bracket (13) is attached to the head pad and encircles
the load arm adjacent its second end. A lifting member
(11) made on the body includes an actuation device (12,
14) for engaging a lifting surface (13b) on the load arm
which shifts the load arm in opposition to the bias produced
thereon by the tongue (20) when force is applied to the
actuation device in a preselected range of directions.

- 1 -

"HEAD ARM"

This invention relates to head arms.

In the computer industry, perhaps the most common type of mass storage device is the disc memory. Such a device includes usually a plurality of rotating discs, each side carrying an oxide recording surface on which are or can be recorded concentric data tracks. Cantilevered arms are attached to a moveable carriage adjacent the rotating disc, and their position relative to the disc is electrically controllable. At the free ends of these arms are located transducing heads carried in sliders or pads which are shifted radially across the recording surface by movement of the carriage. Each pad itself is carried by a mounting which resiliently allows the pad to translate axially, pitch and roll relative to the data track motion as the recording surface changes axial position during rotation with respect to its datum due to inavoidable inaccuracies in its flatness and bearing mounting. The mounting is relatively stiff for other degrees of freedom. The head pads are designed to float on a very thin film of air adjacent the recording surfaces, thereby preventing any actual contact and potential damage being inflicted on either the recording surfaces or the head by one another. A spring-loaded arm presses on each pad to force it toward the disc and hold it at a predetermined distance therefrom.

- 2 -

Further, it is desirable that the carriage is capable of retracting these pads past the periphery of the discs before stopping disc rotation, to prevent contact between them, and to permit replacement of the discs. Retracting is usually accomplished by means of a cam and a follower arrangement in which the spring-loaded arm carries either the cam or the follower, and lifts the head as it nears the edge of the disc during the retraction operation. When the carriage is moved radially inward from its retracted position, the cam and follower arrangement cooperate to land the pad on its recording surface.

It is at this point where problems now arise. Modern head pads are mounted in a very flexible gimbal spring which furnishes little resistance to pitch and roll of the head pad so as to allow it more accurately to follow the slight deviations in position of its recording disc. Thus, when the pad lands on the rotating disc, the air bearing surface of the head pad may not be perfectly parallel to the recording surface. Such a condition may permit a corner of the pad to penetrate the air film causing each element to scuff and wear the other. In fact, particles may be scratched from either the head pad or the recording disc which precipitate an avalanche-type failure where particles abraded from these elements build up faster than a filtering system can remove them.

Previously designed head unload mechanisms may employ two cam/follower units (U.S. Patent Specification No. 3 896 495). If the units are not precisely aligned with each, the flying surface of the head pad will pitch causing the problems just mentioned. Typical single cam lift mechanisms have their cams near a side of the head arm, so the followers can be stacked as a single unit (see U.S. Patent Specifications Nos. 3 531 788, 3 579 213, 3 914 791, 3 786 457 and 3 713 121). Such off-centre lifting practically guarantees an unpredictable amount of head pitch during during lift and land.

There are some designs which avoid this problem. U.S. Patent Specification No. 3 984 873 teaches a centrally located cam actuated by a follower which operates independently of the head arm position. U.S. Patent Specification No. 4 017 898 discloses a centrally located lift arm actuated by a bar which moves vertically with respect to the disc surface. U.S. Patent Specification No. 4 120 010 shows a device employing a transversely (respective to the long dimension of the head) shiftable hair pin employing a two-stage camming operation to lift the head, but does not lift from the centre of the head pad, however, and hence has the potential for rolling the head pad during lift and land.

According to one aspect of the present invention there is provided a head arm comprising: a rigid body arranged to be connected to a disc memory carriage; a head pad support attached in cantilever fashion to, and extending past an edge of the body and substantially perpendicular thereto, said support carrying a head pad at a free end, and orientated with the plane of a flying surface substantially parallel to the long dimension of the support, said support being shaped to provide small resistance to movement of the head pad orthogonal to the plane of the flying surface, and substantial resistance to movement parallel to the plane of the flying surface; a relatively rigid load arm; means for attaching the load arm at a first end to the body in a position in which a second end is adjacent the side of the head pad opposite the flying surface; resilient bias means for urging the second end of the load arm toward the head pad with a predetermined force; a bracket attached to the head pad and encircling the load arm adjacent its second end; and lifting means carried on the body and including an actuation device for engaging a lifting surface on the load arm and shifting the load arm in opposition to the bias produced thereon by the bias means, when force is applied to

0033809

- 4 -

the actuation device in a preselected range of directions.

Preferably the lifting means comprises a lift member pivotably attached to at least one side of the body adjacent said edge and extending into engagement with the said lifting surface, said actuation device comprising a cam follower on the lift member and adjacent the body.

The lift member may comprise a pair of pivot arms each carrying adjacent a first end a stub shaft, the stub shafts being coaxial and facing each other, said stub shafts being journaled on opposite sides of the body adjacent the edge, and brace means connected between second ends of the pivot arms.

In the preferred embodiment the pivot arms, the stub shafts and brace means of the lift member are formed from a single wire with the stub shafts comprising the ends of the wire. A portion of the wire serving as the brace means may include a central projection which engages the said lifting surface.

The lifting surface may be provided on a bracket encircling the projection.

The invention is illustrated, merely by way of example, in the accompanying drawings, in which:-

Figure 1 is a perspective view of a head arm according to the present invention;

Figure 2 is a top view of the head arm of Figure 1;

Figure 3 is a side view of the head arm of Figure 1 in an extended position;

Figure 4 is a side view of the head arm of Figure 1 in a retracted position;

Figure 5 is a cross-sectional view showing the interaction of a load arm with a head pad of the head arm of Figure 1; and

Figure 6 is a cross-sectional view showing the spacial relationship between a lift arm of the head arm of Figure 1 and the bracket with which it makes contact when lifting the head arm.

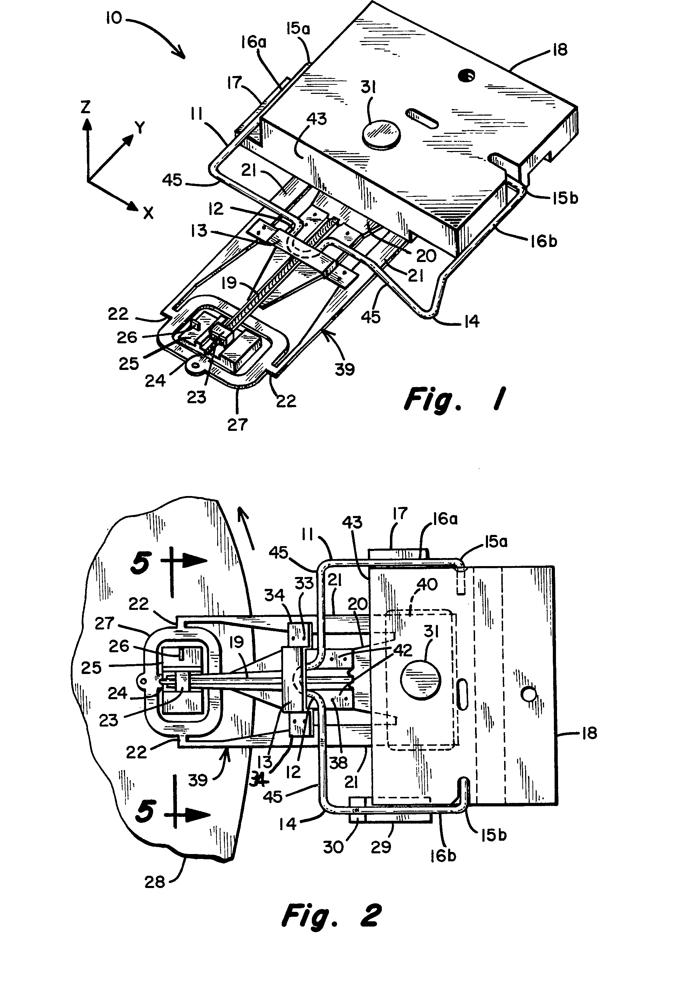

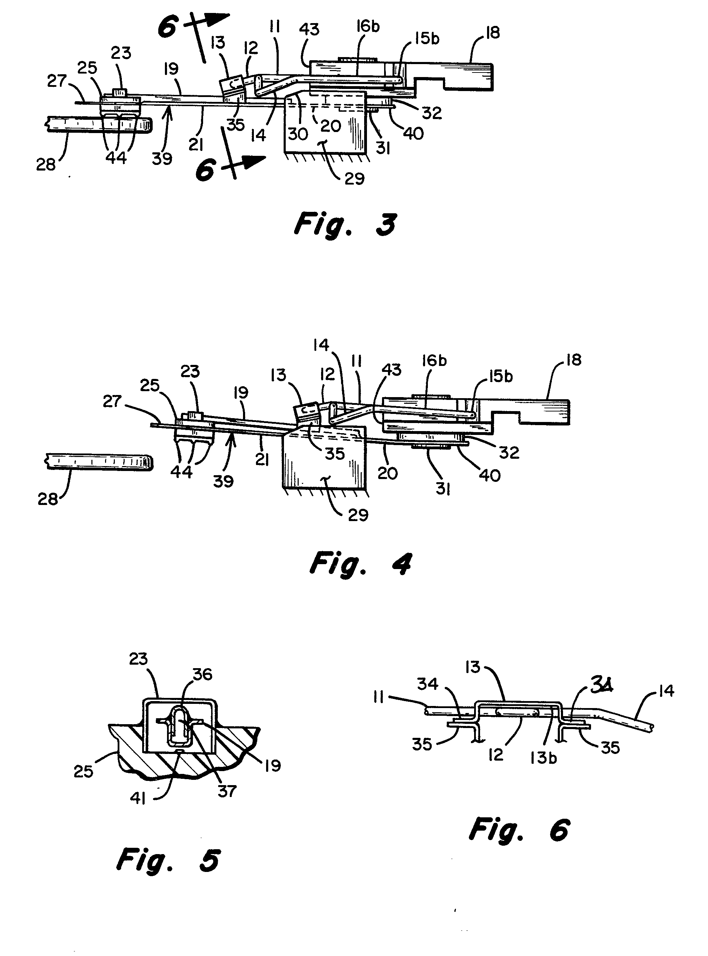

Referring first to Figures 1 - 4, a head arm 10 according to the present invention comprises a body 18 which supports the remaining elements of the head arm and is itself attached to a carrier (not shown) of a disc drive. A head pad 25 has flying surfaces 44 which generate aerodynamic lift during operation. A head pad support element 39 comprises a unitary, thin, substantially flat, resilient piece of nonmagnetic material incorporating head arms 21, a load spring segment or tongue 20, a gimbal ring 27, pad attachment tabs 24, gimbal tabs 22 and an attachment portion 40. The support element 39 is attached, in cantilever fashion, to the body 18. The attachment portion 40 is spot-welded to a spacer 32, and both are securely riveted to the body 18 by a rivet 31. The arms 21 project from beneath the attachment portion 40 perpendicularly to an edge 43 of the body 18, and pass beneath load arm tabs 35 (Figure 3) without touching or contacting them. The gimbal tabs 22 are unitary with the arms 21 and are also unitary with the gimbal ring 27 which they support. The tab 24 is unitary with the gimbal ring 27 and provides an area to which the head pad 25 can be attached, preferably by adhesive. A similar tab, hidden by a load arm 19, supports the other side of the head pad 25. The head pad 25 carries a head 26 so that a transducing surface of the head is coplanar with a flying surface of the head pad. The load arm 19 provides a force on the back of the head pad 25 opposing the aerodynamic force between a rotating disc 28 (only a segment of which is shown in Figures 2 to 4), and the head pad 24. The force placed on the head pad 25 by the load arm 19 is provided by the tongue 20 of the support element 39. The load arm 19 is unitary with flanges 42 (Figure 2) by which it is attached by spot welds 38 to the tongue 20. No significant forces are imposed on the load arm 19 other than those provided by the head pad 25 and the tongue 20. The tongue 20 may well require a predetermined bend downward (as viewed in Figures 3 and 4) to properly load the head pad 25 during operation. Referring to Figure 5, the head pad 25 loading force is transferred from the load arm 19 via a load button 41, positioned so as to ensure the proper location of the loading force relative to the lift generated by the head pad 25 during rotation of the disc 28. The load arm 19 itself must be very rigid and is preferably bent into a channel-shaped cross-section (see Figure 5) to provide the required stiffness.

In operation, when the head pad 25 is landed on the disc 28, the tongue 20 provides force to the load arm 19 which is transferred through the load button 41 to press the head pad 25 toward the disc 28 in opposition to the aerodynamic lift generated by relative movement between them. The head arms 21 are very resilient in the axial (relative to the disc 28) direction, but relatively stiff in the tangential and radial directions relative thereto. Thus the head pad 25 can easily compensate for slight wobble of the disc 28 during rotation, and avoid direct contact between the head pad 25 and the disc. The flexibility of the head arms 21, in conjunction with the flexibility of the gimbal tabs 22, the attachment tabs 24, and the gimbal ring 27, allow pitch and roll of the head pad 25, providing for further adapting of the position of the head pad relative to the continual slight shifting of the disc 28.

The head pad 25 is lifted from the disc 28 while the carriage is retracting and the head pad 25 is lowered when extending the carriage into the transducing position. As explained earlier, the key is a two-stage lifting operation for the head pad. A preferred means of implementing this concept includes a lift arm 11. The lift arm 11 comprises a pair of stub shafts 15a, 15b, pivot arms 16a, 16b and an actuation device comprising a cam follower 14 and a projection 12 carried between braces 45 which join the pivot arms. Preferably a single piece of small diameter relatively stiff wire is bent into the shape shown to form the lift arm 11, and the two ends of the wire are bent to form the stub shafts 15a, 15b.

A segment of the wire adjacent the stub shaft 15b is bent down to form the cam follower 14. The wire is further bent to form the projection 12 which actually transfers the lifting force to the load arm 19. The remaining end of the wire is bent to form the pivot arm 16a having at its very end the stub shaft 15a, coaxial with and facing the stub shaft 15b. The body 18 further includes a ledge 17 to support the pivot arm 16a in a position preventing the lift arm 11 from interfering with the operation of the load arm 19 with the head pad 25, but permitting transfer of lifting forces to the load arm 19 during retraction and extension of the assembly.

A bracket 13 is attached by projecting tabs 34 to projecting tabs 35 (Figure 6) of the load arm 19, preferably by spot welds 33. On the inside of the bracket 13 immediately adjacent the projection 12 is a lifting surface 13b which the projection 12 contacts to transmit the lifting force to the load arm 19. A similar but somewhat smaller bracket 23 is attached to the head pad 25 and encloses the end of the load arm 19 adjacent the head pad 25. The lift arm 11 is pivoted up and down by a cam 29 as the head arm 10 is extended and retracted (Figures 3 and 4). The actual lifting is performed by an angled cam portion 30 interacting with the cam follower 14. The ledge 17 supports the lift arm 11 in a position between the lifting surface 13b and the load arm 19 while the body 18 is extended and the head pad 25 is riding on the disc 28. Also note that in this preferred embodiment with relatively stiff wire comprising the lift arm 11, lifting of the load arm 19 will take place in a very predictable way in that no alignment of cams on each side of the head arm 10 governs the motion of the load arm 19.

A striker 36 (Figure 5) is attached to the end of the load arm 19 facing the top and inside of the bracket 23. A totally enclosed area 37 so formed is a convenient point for the wires from the head arm 26 to enter the channel of the load arm 19. As the lift arm 11 lifts the load arm 19 bending the tongue 20, the striker 36 contacts the inside area of the bracket 23 and the head pad 25 is lifted up from the surface of the disc 28, as shown in Figure 4. The contact point between the bracket 23 and the striker 36 must be carefully selected so that no roll or pitch of the head 25 occurs during lifting and lowering of the head pad relative to the disc 28. It has been found that by designing the striker 36 to be quite long (e.g. 1 mm along the long axis of the load arm 19) and positioned to contact the bracket 23 in alignment with the gimbal tabs 22 which in practice allow the head pad 25 to be lifted and dropped in the precise correct attitude. It is essential for proper operation during lifting and landing that the load arm 19 does not contact the sides of the bracket 23. The resulting frictional hysteresis will dramatically affect the roll and pitch of the head pad 25 during lifting and dropping and will almost certainly cause crashes.

- 9 -

CLAIMS

1. A head arm characterised by comprising: a rigid body (18) arranged to be connected to a disc memory carriage; a head pad support (39) attached in cantilever fashion to, and extending past an edge (43) of the body and substantially perpendicular thereto, said support carrying a head pad (25) at a free end, and orientated with the plane of a flying surface (44) substantially parallel to the long dimension of the support, said support being shaped to provide small resistance to movement of the head pad orthogonal to the plane of the flying surface, and substantial resistance to movement parallel to the plane of the flying surface; a relatively rigid load arm (19); means for attaching the load arm at a first end to the body in a position in which a second end is adjacent the side of the head pad opposite the flying surface; resilient bias means (20) for urging the second end of the load arm toward the head pad with a predetermined force; a bracket (23) attached to the head pad and encircling the load arm adjacent its second end; and lifting means (11, 12, 14) carried on the body and including an actuation device (12, 14) for engaging a lifting surface (13b) on the load arm and shifting the load arm in opposition to the bias produced thereon by the bias means (20),when force is applied to the actuation device in a preselected range of directions.

2. A head arm as claimed in claim 1 characterised in that the lifting means comprises a lift member(11) pivotably attached to at least one side of the body (18) adjacent said edge and extending into engagement with the said lifting surface, said actuation device comprising a cam follower (14) on the lift member and adjacent the body.

3. A head arm as claimed in claim 2 characterised in that the lift member (11) comprises a pair of pivot arms (16a, 16b) each carrying adjacent a first end a stub shaft (15a,15b), the stub
shafts being coaxial and facing each other,said stub shafts being
journaled on opposite sides of the body (18) adjacent the edge (43),
and brace means (45) connected between second ends of the pivot arms.

4.     A head arm as claimed in claim 3 characterised in that the
pivot arms (16a,16b) the stub shafts (15a,15b) and brace means (45)
of the lift member are formed from a single wire with the stub shafts
comprising the ends of the wire.

5.     A head arm as claimed in claim 4 characterised in that the
portion of the wire serving as the brace means includes a central
projection (12) which engages the said lifting surface.

6.     A head arm as claimed in claim 5 characterised in that the
lifting surface (13b) is provided on a bracket (13) encircling
the projection (12).

Fig. 1

Fig. 2

*Fig. 3*

*Fig. 4*

*Fig. 5*

*Fig. 6*